# EUROPÄISCHE PATENTANMELDUNG

(11) **EP 3 501 819 A1**
(43) Veröffentlichungstag der Anmeldung: **26.06.2019**
(21) Anmeldenummer: 17209900.4
(22) Anmeldetag: 22.12.2017
(51) Int. Cl.: B32B 27/08, B32B 27/28, B32B 27/30, B32B 27/32, B32B 27/36, G02B 5/32

(54) **KUNSTSTOFFFOLIEN FÜR ID-DOKUMENTE MIT VERBESSERTER HELLIGKEIT VON PRÄGEHOLOGRAMMEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft einen Schichtaufbau enthaltend wenigstens eine Schicht (i) umfassend einen thermoplastischen Kunststoff und wenigstens eine weitere Schicht (ii) umfassend einen thermoplastischen Kunststoff, der wenigstens ein Prägehologramm trägt, ein Verfahren zur Herstellung solcher Schichtverbunde, sowie Sicherheitsdokumente, insbesondere Identifikationsdokumente, die den erfindungsgemäßen Schichtaufbau aufweisen.

## Beschreibung

Die vorliegende Erfindung betrifft einen Schichtaufbau enthaltend wenigstens eine Schicht (i) umfassend einen thermoplastischen Kunststoff und wenigstens eine weitere Schicht (ii) umfassend einen thermoplastischen Kunststoff, der wenigstens ein Prägehologramm trägt, ein Verfahren zur Herstellung solcher Schichtverbunde, sowie Sicherheitsdokumente, insbesondere Identifikationsdokumente, die den erfindungsgemäßen Schichtaufbau aufweisen.

Für die Herstellung von Sicherheitsdokumenten werden für den Kern des Sicherheitsdokuments üblicherweise Folien aus PETG oder PVC und in den äußeren Schichten Folien basierend auf Polycarbonaten zu einem Folienstapel zusammengelegt und in einer Laminierpresse unter Druck und Temperatur zu einem festen Schichtverbund verpresst. Diese Sicherheitsdokumente können beliebig personalisiert oder mit Sicherheitselementen versehen werden, die üblicherweise vor der Laminierung in den Schichtverbund eingebracht werden. Der Kern solcher Sicherheitsdokumente kann aber auch Polycarbonat-Folien enthalten.

Prägehologramme in Sicherheitsdokumenten, vorzugsweise Identifikationsdokumenten, sind ein weitverbreitetes Element um die Fälschungssicherheit der Dokumente zu erhöhen. Die Sicherheit gegen Fälschung wird dadurch erzielt, dass der Prüfer des Dokuments allein durch Betrachtung des Prägehologrammes urteilen kann ob es sich um ein originales oder gefälschtes Prägehologramm handelt.

WO-A 2010/091796 offenbart die Herstellung eines laminierten Schichtverbundes bei welchem wenigstens eine Basisschicht und wenigstens eine weitere Schicht, zwischen denen sich ein Bauteil befindet, aus zwei thermoplastischen Materialien mit unterschiedlichen Vicat-Erweichungstemperaturen B/50 zweistufig zu einem Schichtverbund laminiert werden, wobei das thermoplastische Material mit der niedrigeren Erweichungstemperatur das Bauteil in den laminierten Schichtverbund umschließt.

WO-A 2012/164011 offenbart die Übertragung eines Prägehologramms von einer Trägerfolie auf eine Polycarbonat-Folie und anschließende Einbettung dieses Prägehologramms in einen Schichtverbund.

In Sicherheitsdokumenten können zwei Typen von Prägehologrammen verwendet werden: Bei der ersten Type handelt es sich um sogenannte Transfer-Prägehologramme. Diese werden auf eine separate Kunststofffolie geprägt und anschließend wird das geprägte Stück Kunststofffolie auf die Kunststofffolie, aus welcher das Sicherheitsdokument besteht, aufgeklebt und anschließend laminiert.

Transfer-Prägehologramme bestehen in der Regel aus einer besonders dünnen Polyesterfolie, im Dickenbereich 5- 25 µm. Die Nanostrukturen, welche nach der Metallisierung der Folie das Licht brechen, werden über rotierende Walzen in die Folie geprägt. Die Prägewalzen sind ummantelt mit dem sogenannten "Master" welches ein Blech ist, das die eingearbeiteten Prägestrukturen trägt. Nach dem Prägen erhalten die Hologramme eine Metallisierung, welche je nach gewünschtem Erscheinungsbild des Prägehologramms in ihrer Opazität variiert. So können Prägehologramme annähernd transparent gehalten werden, oder eine deckende metallische Erscheinung haben. Anschließend wird auf die geprägte und metallisierte Seite der Prägehologramme eine dünne Klebeschicht aufgetragen. Hierbei handelt es sich in der Regel um einen wärmeaktivierbaren Klebstoff, welcher es erlaubt die Prägehologramme auf die Kunststofffolien der Sicherheitsdokumente zum Haften zu bringen - sogenannte "Transfer-Prägehologramme". Dabei wird das Prägehologramm mit seiner klebstoffbeschichteten Seite auf die Kunststofffolie gelegt und anschließend mit einem Rollenlaminator auf die Kunststofffolie geklebt. Die Aktivierungstemperatur der Klebstoffschicht ist niedriger als die Erweichungstemperatur der Hologrammfolie, so dass es zu keiner Deformation der Nanostrukturen des Prägehologramms kommen kann. Bei den beheizten Laminierwalzen handelt es sich in der Regel um weiche Walzen aus Gummi oder Silikon, so dass die Nanostrukturen der Prägehologramme nicht beschädigt werden können.

Bei der zweiten Type von Prägehologrammen prägt ein sogenannter Master die Nanostrukturen der Hologramme direkt auf die Oberfläche einer Folie, die zur Herstellung der Sicherheitsdokumente verwendet wird, beispielsweise in die Oberfläche einer Polycarbonatfolie, welche eine Dicke von 30 µm und mehr haben kann.

Bei der Herstellung von Sicherheitsdokumenten können verschiedene Kunststofffolien in einem Stapel von mehreren Kunststofffolien, in der Regel drei bis fünfzehn Kunststofffolien, aufeinander gelegt werden und zu einem festen Schichtverbund laminiert. In den mittleren Lagen des Folienstapels können weiße Kunststofffolien platziert werden, in den äußeren Lagen transparente Kunststofffolien. Idealerweise wird das Prägehologramm auf eine transparente Kunststofffolie appliziert, die nachher auch die Frontseite des Sicherheitsdokuments darstellt, und eine weitere transparente Kunststofffolie wird zum Schutz des Prägeholgramms darüber gelegt, um das Prägehologramm zu schützen. Dieser Kunststofffolienstapel wird üblicherweise ausgerichtet, fixiert und in einer Laminierpresse unter Einwirkung von Wärme und Druck für eine bestimmte Zeitspanne verpresst, so dass ein monolithischer Verbund der Folienschichten entsteht, ein sogenanntes Laminat.

Bei diesem Laminierschritt ist es besonders wichtig, den Druck und die Temperatur so zu wählen, dass die Prägehologramme während des Laminiervorgangs nicht beschädigt werden. Sofern der Druck zu hoch gewählt wird, werden die Nanostrukturen des Prägehologramms beschädigt. Die Temperatur für die Laminierung muss so gewählt werden, dass der Kunststofffolienstapel einen festen Verbund bildet, der sich später nicht wieder in die einzelnen Schichten auflöst. Dies hat zu Folge dass die Prägehologramme im Sicherheitsdokument sich deutlich von ihrem ursprünglichen optischen Eindruck unterscheiden. Sie wirken matt, die Details ihrer Form sind nicht deutlich zu erkennen und die Lichtbrechung nimmt stark ab und Farben sind kaum noch erkennbar.

Der Erfindung lag daher die Aufgabe zugrunde, einen Schichtaufbau bereit zu stellen, auf dem Prägehologramme appliziert werden können, deren Prägung und Aussehen auch nach dem Laminieren zu einen festen Schichtverbund nahezu unverändert in Farbe und Form bleiben. Weiterhin war Aufgabe dieser Erfindung, dass dieser Schichtaufbau gut laminierbar ist und nach der Laminierung eine gute Haftung zwischen den einzelnen Schichten des Schichtaufbaus aufweist.

Überraschenderweise wurde gefunden, dass ein Schichtaufbau enthaltend wenigstens eine Schicht (i) umfassend einen thermoplastischen Kunststoff und wenigstens eine weitere Schicht (ii) umfassend einen thermoplastischen Kunststoff, dadurch gekennzeichnet, dass die Vicat-Erweichungstemperatur B/50, bestimmt gemäß ISO 306 (50N; 50°/h) der Schicht (i) um ≥ 3°C bis ≤ 45 °C, vorzugsweise um ≥ 10 bis ≤ 40 °C, besonders bevorzugt um ≥ 15 bis ≤ 30 °C höher oder niedriger als die Erweichungstemperatur der Schicht (ii) ist, und dass wenigstens ein Prägehologramm auf der Schicht (i) oder (ii) so aufgebracht ist, dass die Nanostruktur des wenigstens einen Prägehologramm in Richtung der Schicht zeigt, die die niedrigere Erweichungstemperatur aufweist, ein Prägehologramm nach der Laminierung zu einem festen Schichtverbund aufweist, welches in Farbe und Form nahezu unverändert im festen Schichtverbund vorliegt.

Der erfindungsgemäße Schichtaufbau kann weitere Schichten umfassen. Üblicherweise bilden die erfindungswesentlichen Schichten (i) und (ii) äußere Schichten des Schichtaufbaus, die gegebenenfalls mit einer weiteren Schutzschicht, einer sogenannten Overlay-Folie, versehen werden können.

Der erfindungsgemäße Schichtaufbau kann nach bekannten Methoden zu einem Sicherheitsdokument oder Mehrschichtverbundwerkstoff laminiert werden. Dies erfolgt üblicherweise durch eine Laminierpresse, in der das Folienbündel unter Einwirkung von Druck und Temperatur innig verbunden wird. Hierbei ist es von Vorteil, wenn zumindest eine der Kernfolien oder der Deckfolien eine sehr gute Haftungsneigung während des Laminierprozesses aufweist. Dadurch lässt sich der Prozess der Herstellung dieser Folienverbünde beschleunigen. Ferner ist die Haftung der Deckfolien auf der Kernfolie verbessert. Diese Kernfolie kann transparent und/oder eingefärbt sein, und gute mechanische Eigenschaften aufweisen. Ferner können die Deckfolien laserbedruckbar sein.

Im Rahmen der Erfindung sind unter ppm Gew.-ppm zu verstehen, sofern nichts anderes angegeben wird.

Bei dem thermoplastische Kunststoff der wenigstens einen Schicht (i) und der wenigstens weiteren Schicht (ii) kann es sich bevorzugt um wenigstens einen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, oder deren Mischungen handeln. Für bestimmte Anwendungen kann es vorteilhaft und demnach bevorzugt sein, einen transparenten thermoplastischen Kunststoff einzusetzen.

Besonders geeignete thermoplastische Kunststoffe der Schichten (i) und (ii) sind Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten.

Bevorzugte thermoplastische Kunststoffe der Schichten (i) und (ii) sind Polycarbonate oder Copolycarbonate auf Basis von Diphenolen, Poly- oder Copolykondesate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertem PET (PETG), glycol-modifiziertes Poly- oder Copolycyclohexandimethylenterephthalat (PCTG) oder Poly- oder Copolybutylenterephthalat (PBT oder CoPBT), vorzugsweise Poly-oder Copolykondensate der Naphthalindicarbonsäure, wie beispielhaft und besonders bevorzugt Polyethylenglykolnaphthalat (PEN), Poly- oder Copolykondensat(e) wenigstens einer Cycloalkyl-dicarbonsäure, wie beispielhaft und vorzugsweise Polycyclohexandimethanolcyclohexandicarbonsäure (PCCD), Polysulfone (PSU), Polyvinylhalogeniden, wie beispielhaft und vorzugsweise Polyvinylchlorid (PVC) oder Mischungen aus den vorangehend genannten, umfasst.

In einer bevorzugten Ausführungsform umfasst wenigstens eine Schicht (i) oder (ii) einen thermoplastischen Kunststoff ausgewählt aus der Gruppe von Polycarbonaten oder Copolycarbonaten auf Basis von Diphenolen, Poly- oder Copolykondensaten der Terephthalsäure, vorzugsweise Poly-oder Copolyethylenterephthalat (PET oder CoPET), glycol-modifiziertem PET (PETG), glycol-modifiziertem Poly- oder Copolycyclohexandimethylenterephthalat (PCTG) oder Poly- oder Copolybutylenterephthalat (PBT oder CoPBT), Poly- oder Copolykondensaten der Naphthalindicarbonsäure, vorzugsweise Polyethylenglykolnaphthalat (PEN), Poly- oder Copolykondensat(en) wenigstens einer Cycloalkyldicarbonsäure, vorzugsweise Polycyclohexandimethanolcyclohexandicarbonsäure (PCCD), Polysulfone (PSU), Polyvinylhalogeniden, vorzugsweise Polyvinylchlorid (PVC) oder Mischungen aus den vorangehend genannten, umfasst und wobei der kristalline Anteil der vorstehend genannten thermoplastischen Kunststoffen in der Schicht (i) oder (ii) ≤ 40 Gew.-%, vorzugsweise 0 bis ≤ 30 Gew.-%, besonders bevorzugt 0 bis ≤ 25 Gew.-% umfasst.

In einer besonders bevorzugten Ausführungsform umfasst wenigstens eine Schicht (i) oder (ii) einen thermoplastische Kunststoff umfassend
a) wenigstens ein oder mehrere Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen wobei das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% bezogen auf die Diolkomponente aufweisen,
b) ein Blend aus wenigstens einem oder mehreren Poly- oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en), wobei der Anteil an Poly- oder Copolycarbonat(en) in diesem Blend in einem Bereich von ≥ 50 Gew.-% bis ≤ 90 Gew.-% liegt, und wobei das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% vorzugsweise in einem Bereich von ≥ 25 bis ≤ 75 mol-%, besonders bevorzugt in einem Bereich von ≥ 25 bis ≤ 70 mol-%, bezogen auf die Diolkomponente aufweisen,
oder
c) ein Blend aus Poly- oder Copolycarbonaten enthaltend bifunktionelle Carbonatstruktureinheiten der Formel (II) 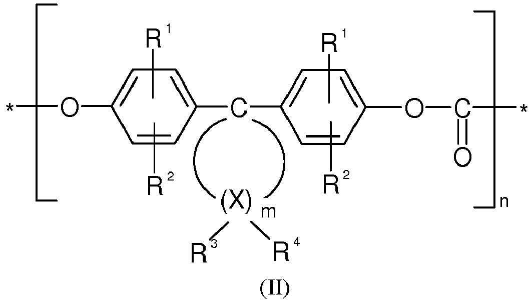 worin
   R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
   m eine ganze Zahl von 4 bis 7, bevorzugt 4 oder 5,
   R³ und R⁴ für jedes X individuell wählbar, unabhängig voneinander Wasserstoff oder C₁-C₆-Alkyl,
   X Kohlenstoff, und
   n eine ganze Zahl größer 20 bedeuten,
   mit der Maßgabe, dass an mindestens einem Atom X, R³ und R⁴ gleichzeitig Alkyl bedeuten, aufweist.

Im Folgenden werden die Poly-oder Copolykondensate sowie die Blends der Poly-oder Copolykondensate sowie die Polycarboante mit bevorzugten Ausführungsformen näher beschrieben.

Die Poly- oder Copolykondensate einer aromatischen und/oder Cycloalkyl-Dicarbonsäure und aliphatischen, cycloaliphatischen und/oder araliphatischen Diolen mit 2 bis 16 Kohlenstoffatomen lassen sich nach bekannten Methoden aus der entsprechenden Dicarbonsäure (oder ihren reaktionsfähigen Derivaten) und aliphatischen, cycloaliphatischen und/oder araliphatischen Diolen mit 2 bis 16 C-Atomen herstellen (Kunststoff-Handbuch Bd. VIII, S. 695 ff, Karl-Hanser-Verlag, München 197 Als Dicarbonsäure des Poly- oder Copolykondensats kann wenigstens eine Verbindung aus der Gruppe Orthophthalsäure, Terephthalsäure, Isophthalsäure, tert-Butylisophthalsäure, 3,3'-Diphenyl-dicarbonsäure, 4,4'-Diphenyldicarbonsäure, 4,4-Benzophenondicarbonsäure, 3,4'-Benzophenon-dicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure, Naphthalin-1,4-dicarbonsäure, Naphthalin-1.5-dicarbonsäure, Naphthalin-2,6-dicarbonsäure und /oder Cyclohexandicarbonsäure oder die reaktionsfähigen Derivate der genannten Dicarbonsäuren, vorzugsweise Terephthalsäure, Naphthalin-1,4-dicarbonsäure, Naphthalin-1,5-dicarbonsäure, Naphthalin-2,6-dicarbonsäure und/oder Isophathalsäure oder die reaktionsfähigen Derivate der genannten Dicarbonsäuren, besonders bevorzugt Terephthalsäure und/oder Isophthalsäure oder deren reaktionsfähigen Derivate und ganz besonders bevorzugt Terephthalsäure oder ein reaktionsfähiges Derivat der Terephthalsäure eingesetzt werden.

Die Säurekomponente des Poly-oder Copolykondensats kann neben den vorstehend genannten Dicarbonsäuren noch bis zu 20 Mol-% andere aromatische Dicarbonsäuren mit 8 bis 14 C-Atomen oder aliphatische Dicarbonsäuren mit 4 bis 12 C-Atomen enthalten, wie beispielsweise Phthalsäure, Isophthalsäure, Naphthalin-2,6-dicarbonsäure, 4,4'-Diphenyldicarbonsäure, Bernstein-, Adipin-, Sebacinsäure, Malonsäure, Glutarsäure, Dodecandicarbonsäure, Korksäure, Pimelinsäure, Azelainsäure, Cyclohexandiessigsäure.

Vorzugsweise weist das Poly-oder Copolykondensat der aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-%, vorzugsweise ≥ 25 bis ≤ 75 Mol-% und besonders bevorzugt ≥ 25 bis ≤ 70 Mol-% bezogen auf die Diolkomponente auf.

Als Diolkomponente des Poly- oder Copolykondensats können aliphatische, cycloaliphatische oder araliphatische Diole mit 2 bis 16 C-Atomen eingesetzt werden, wie beispielsweise Ethylenglykol, Diethylenglycol, 1,2-Propandiol, 1, 3-Propandiol, Neopentylglykol, 1,4-Butandiol, 1,5-Pentandiol, 1,6-Hexandiol, p-Xyloldiol und Mischungen aus mindestens zwei der vorstehenden Verbindungen, vorzugsweise Etyhlengylkol, Diethylengylkol, 1, 4-Butandiol sowie Mischungen aus mindestens zwei der vorstehenden Verbindungen.

Die Diolkomponente kann noch bis zu 10 Mol-% andere aliphatischer Diole mit 3 bis 12 C-Atomen oder cycloaliphatischer Diole mit 6 bis 21 C-Atomen enthalten, wie beispielsweise 2-Ethylpropandiol-1,3, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932), 1,4:3,6-Dianhydro-D-sorbitol (Isosorbid), und 2,4,8,10-tetraoxaspiro[5.5]undecane-3,9-diethanol sowie Mischungen aus mindestens zwei der vorstehenden Verbindungen.

Als Poly- oder Copolykondensate einer Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen, cycloaliphatischen oder araliphatischen Diolen mit 2 bis 16 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente und ≥ 20 bis ≤ 80 Mol-%, vorzugsweise ≥ 25 bis ≤ 75 Mol-% und besonders bevorzugt ≥ 25 bis ≤ 70 Mol-% 1,4-Cyclohexandimethanol, 1,3-Cyclohexandimethanol und/oder 2,2,4,4-Tetramethyl-1,3-cyclobutandiol, vorzugsweise 1,4-Cyclohexandimethanol und/oder 1,3-Cyclohexandimethanol bezogen auf die Diolkomponente und ≥ 20 bis ≤ 80 mol-%, vorzugsweise ≥ 25 bis ≤ 75 mol-%, besonders bevorzugt ≥ 30 bis ≤ 75 Mol-% Ethylenglykol-, Diethylenglykol- und/oder 1,4-Butandiol, bezogen auf die Diolkomponente.

Die bevorzugten Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säure bzw. auf die Alkohol-Komponente verwendet.

Besonders bevorzugt sind Polyalkylenterephthalate, die allein aus Terephthalsäure und deren reaktionsfähigen Derivaten (z. B. deren Dialkylestern) und 1,4-Cyclohexandimethanol, 1,3-Cyclohexandimethanol, Ethylenglykol und/oder Butandiol-1,4 hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/ cyclohexandimethanol-1,4 / butandiol-1,4)-terephthalate, Poly-(ethylenglykol/ cyclohexan-dimethanol-1,4/ diethylengylcol)-terephthalate, Poly-(ethylenglykol/ cyclohexan-dimethanol-1,4)-terephthalate und/oderPoly-(butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Im Rahmen der Erfindung ist unter Polycarbonat Poly- und/oder Copolycarbonat zu verstehen.

Als Poly- oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein. Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder Dihydroxydiphenycycloalkane der Formel (Ia) 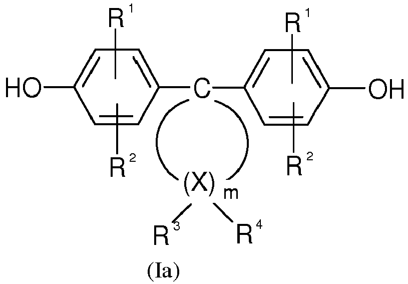 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formeln (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

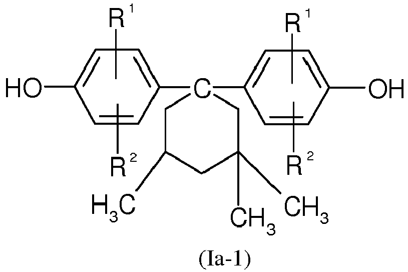

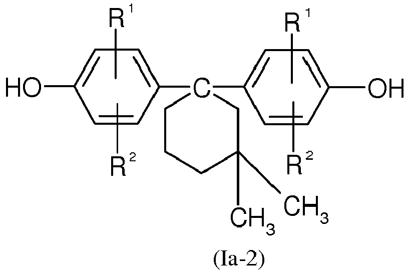

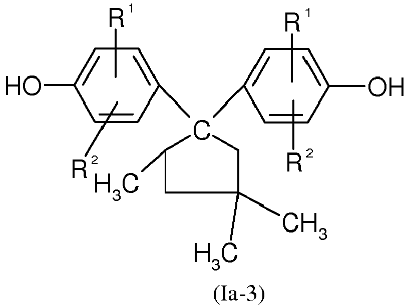

Ein ganz besonders bevorzugtes Dihydroxydiphenylcycloalkan der Formel (Ia) ist 1,1-Bis-(4-hydroxyphenyl)-3,3,5-trimethyl-cyclohexan (Formel (Ia-1) mit R¹ und R² gleich H).

Solche Polycarbonate können gemäß der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (III) sein, 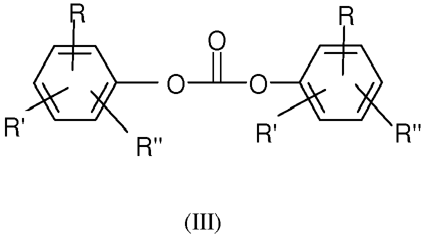 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R'" bedeuten kann, wobei R'" für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenylphenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsaficylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (IV) handeln, 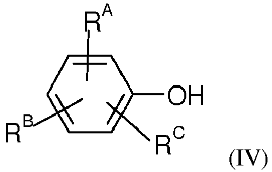 wobei
R^{A} für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

In einer Ausführungsform umfasst wenigstens eine Schicht (i) oder (ii) einen thermoplastischen Kunststoff umfassend
a) wenigstens ein oder mehrere Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen wobei das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% bezogen auf die Diolkomponente aufweisen,
a) einen Blend aus wenigstens einem oder mehreren Poly- oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en), wobei der Anteil an Poly- oder Copolycarbonat(en) in diesem Blend in einem Bereich von ≥ 50 Gew.-% bis ≤ 90 Gew.-% liegt, und wobei das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% vorzugsweise in einem Bereich von ≥ 25 bis ≤ 75 mol-%, besonders bevorzugt in einem Bereich von ≥ 25 bis ≤ 70 mol-%, bezogen auf die Diolkomponente aufweisen,
oder
b) einen Blend aus Poly- oder Copolycarbonaten enthaltend bifunktionelle Carbonatstruktureinheiten der Formel (II) 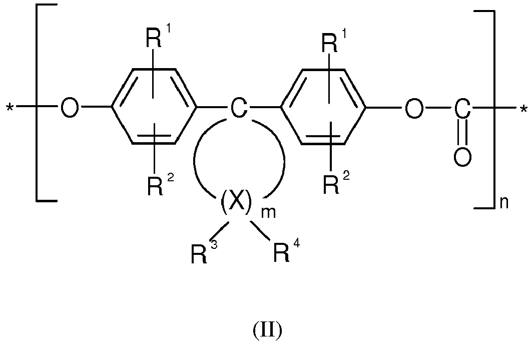 worin
   R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
   m eine ganze Zahl von 4 bis 7, bevorzugt 4 oder 5,
   R³ und R⁴ für jedes X individuell wählbar, unabhängig voneinander Wasserstoff oder C₁-C₆-Alkyl,
   X Kohlenstoff, und
   n eine ganze Zahl größer 20 bedeuten,
   mit der Maßgabe, dass an mindestens einem Atom X, R³ und R⁴ gleichzeitig Alkyl bedeuten, aufweist.

In einer Ausführungsform der Erfindung umfasst wenigstens eine Schicht (i) wenigstens ein oder mehrere Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen wobei das oder die Poly-oder Copolykondensat(e) einer aromatischen und/oder Cycloalkyl-Dicarbonsäure, vorzugsweise ausgewählt aus der Gruppe Orthophthalsäure, Terephthalsäure, Isophthalsäure, tert-Butylisophthalsäure, 3,3'-Diphenyl-dicarbonsäure, 4,4'-Diphenyldicarbonsäure, 4,4-Benzophenondicarbonsäure, 3,4'-Benzophenon-dicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure, Naphthalin-1,4-dicarbonsäure, Naphthalin-1,5-dicarbonsäure, Naphthalin-2,6-dicarbonsäure und/oder Cyclohexandicarbonsäure oder die reaktionsfähigen Derivate der genannten Dicarbonsäuren, vorzugsweise Terephthalsäure, Naphthalin-1,4-dicarbonsäure, Naphthalin-1,5-dicarbonsäure, Naphthalin-2,6-dicarbonsäure und/oder Isophathalsäure oder die reaktionsfähigen Derivate der genannten Dicarbonsäuren, besonders bevorzugt Terephthalsäure und/oder Isophthalsäure oder deren reaktionsfähigen Derivate und ganz besonders bevorzugt Terephthalsäure oder ein reaktionsfähiges Derivat der Terephthalsäure, und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% bezogen auf die Diolkomponente aufweisen und die wenigstens weitere Schicht (ii) umfasst vorzugsweise Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten, besonders bevorzugt Polycarbonate oder Copolycarbonate auf Basis von Diphenolen, Poly- oder Copolyacrylate und Poly- oder Copolymethacrylate wie beispielsweise Polymethylmethacrylat (PMMA), Poly- oder Copolykondensate der Terephthalsäure, wie beispielsweise Poly- oder Copolyethylenterephthalat (PET oder CoPET), glycol-modifiziertes PET (PETG), glycol-modifiziertes Poly- oder Copolycyclohexandimethylenterephthalat (PCTG), Poly-oder Copolybutylenterephthalat (PBT oder CoPBT), Poly- oder Copolykondensate der Naphthalindicarbonsäure, wie beispielsweise Polyethylenglykolnaphthalat (PEN), Polyvinylhalogenide, wie beispielsweise Polyvinylchlorid (PVC), ganz besonders bevorzugt wenigstens ein Polycarbonat oder Copolycarbonat. In dieser Ausführungsform wird das Prägehologramm vorzugsweise in Form eines Transfer-Prägehologramms so aufgebracht werden, dass die Nanostruktur des Prägeholograms in Richtung der Schicht (i) zeigt. Die Schichten (i) und (ii) können auch vertauscht werden.

In einer anderen Ausführungsform der Erfindung umfasst wenigstens eine Schicht (i) wenigstens einen Blend aus wenigstens einem oder mehreren Poly- oder Copolykondensat(en) einer aromatischen und/oder Cycloalkyl-Dicarbonsäure, vorzugsweise ausgewählt aus der Gruppe Orthophthalsäure, Terephthalsäure, Isophthalsäure, tert-Butylisophthalsäure, 3,3'-Diphenyl-dicarbonsäure, 4,4'-Diphenyldicarbonsäure, 4,4-Benzophenondicarbonsäure, 3,4'-Benzophenon-dicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure, Naphthalin-1,4-dicarbonsäure, Naphthalin-1,5-dicarbonsäure, Naphthalin-2,6-dicarbonsäure und/oder Cyclohexandicarbonsäure oder die reaktionsfähigen Derivate der genannten Dicarbonsäuren, vorzugsweise Terephthalsäure, Naphthalin-1,4-dicarbonsäure, Naphthalin-1,5-dicarbonsäure, Naphthalin-2,6-dicarbonsäure und/oder Isophathalsäure oder die reaktionsfähigen Derivate der genannten Dicarbonsäuren, besonders bevorzugt Terephthalsäure und/oder Isophthalsäure oder deren reaktionsfähigen Derivate und ganz besonders bevorzugt Terephthalsäure oder ein reaktionsfähiges Derivat der Terephthalsäure und aliphatischen, cycloaliphatischen und/oder araliphatischen Diolen mit 2 bis 16 Kohlenstoffatomen mit einem oder mehreren Poly- oder Copolycarbonat(en), wobei der Anteil an Poly- oder Copolycarbonat(en) in diesem Blend in einem Bereich von > 0 Gew.-% bis ≤ 90 Gew.-% , vorzugsweise > 0 Gew.-% bis≤ 80 Gew.-%, liegt, und wobei das oder die Poly-oder Copolykondensat(e) einer aromatischen und/oder Cycloalkyl-Dicarbonsäure, vorzugsweise Orthophthalsäure, Terephthalsäure, Isophthalsäure, tert-Butylisophthalsäure, 3,3'-Diphenyl-dicarbonsäure, 4,4'-Diphenyldicarbonsäure, 4,4-Benzophenondicarbonsäure, 3,4'-Benzophenon-dicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure, Naphthalin-1,4-dicarbonsäure, Naphthalin-1,5-dicarbonsäure, Naphthalin-2,6-dicarbonsäure und/oder Cyclohexandicarbonsäure oder die reaktionsfähigen Derivate der genannten Dicarbonsäuren, vorzugsweise Terephthalsäure, Naphthalin-1,4-dicarbonsäure, Naphthalin-1,5-dicarbonsäure, Naphthalin-2,6-dicarbonsäure und/oder Isophathalsäure oder die reaktionsfähigen Derivate der genannten Dicarbonsäuren, besonders bevorzugt Terephthalsäure und/oder Isophthalsäure oder deren reaktionsfähigen Derivate und ganz besonders bevorzugt Terephthalsäure oder ein reaktionsfähiges Derivat der Terephthalsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% vorzugsweise in einem Bereich von ≥ 25 bis ≤ 75 mol-%, besonders bevorzugt in einem Bereich von ≥ 25 bis ≤ 70 mol-%, bezogen auf die Diolkomponente aufweisen, und die wenigstens weitere Schicht (ii) umfasst vorzugsweise Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten; besonders bevorzugt Polycarbonate oder Copolycarbonate auf Basis von Diphenolen, Poly- oder Copolyacrylate und Poly- oder Copolymethacrylate wie beispielsweise Polymethylmethacrylat (PMMA), Poly- oder Copolykondensate der Terephthalsäure, wie beispielsweise Poly- oder Copolyethylenterephthalat (PET oder CoPET), glycol-modifiziertes PET (PETG), glycol-modifiziertes Poly- oder Copolycyclohexandimethylenterephthalat (PCTG), Poly- oder Copolybutylenterephthalat (PBT oder CoPBT), Poly- oder Copolykondensate der Naphthalindicarbonsäure, wie beispielsweise Polyethylenglykolnaphthalat (PEN), Polyvinylhalogenide, wie beispielsweise Polyvinylchlorid (PVC), ganz besonders bevorzugt wenigstens ein Polycarbonat oder Copolycarbonat. In dieser Ausführungsform wird das Prägehologramm vorzugsweise in Form eines Transfer-Prägehologramms so aufgebracht werden, dass die Nanostruktur des Prägeholograms in Richtung der Schicht (i) zeigt. Die Schichten (i) und (ii) können auch vertauscht werden.

In einer weiteren Ausführungsform der Erfindung umfasst wenigstens eine Schicht (i) wenigstens einen Blend aus Poly- oder Copolycarbonaten enthaltend bifunktionelle Carbonatstruktureinheiten der Formel (II) 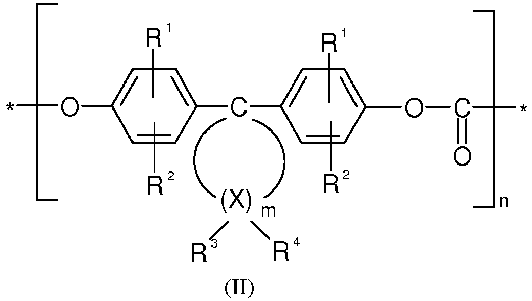 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl,
X Kohlenstoff, und
n eine ganze Zahl größer 20,
mit der Maßgabe, dass an mindestens einem Atom X, R³ und R⁴ gleichzeitig Alkyl, bevorzugt Methyl, bedeuten, aufweist, und die wenigstens weitere Schicht (ii) umfasst vorzugsweise Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly-oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten, besonders bevorzugt Polycarbonate oder Copolycarbonate auf Basis von Diphenolen, Poly- oder Copolyacrylate und Poly- oder Copolymethacrylate wie beispielsweise Polymethylmethacrylat (PMMA), Poly- oder Copolykondensate der Terephthalsäure, wie beispielsweise Poly- oder Copolyethylenterephthalat (PET oder CoPET), glycol-modifiziertes PET (PETG), glycol-modifiziertes Poly- oder Copolycyclohexandimethylenterephthalat (PCTG), Poly-oder Copolybutylenterephthalat (PBT oder CoPBT), Poly- oder Copolykondensate der Naphthalindicarbonsäure, wie beispielsweise Polyethylenglykolnaphthalat (PEN), Polyvinylhalogenide, wie beispielsweise Polyvinylchlorid (PVC), ganz besonders bevorzugt wenigstens ein Polycarbonat oder Copolycarbonat. In dieser Ausführungsform kann das Prägehologramm mit einem geeigneten Prägestempel direkt auf die Schicht (i) aufgebracht werden. Die Schichten (i) und (ii) können auch vertauscht werden.

In einer weiteren Ausführungsform der Erfindung umfasst wenigstens eine Schicht (i) wenigstens einen Blend aus Poly- oder Copolycarbonaten enthaltend bifunktionelle Carbonatstruktureinheiten der Formel (II) worin an einem bis zwei Atomen X, insbesondere an nur einem Atom X, R³ und R⁴ gleichzeitig Alkyl, insbesondere Methyl, sind und die wenigstens weitere Schicht (ii) umfasst vorzugsweise Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten, besonders bevorzugt Polycarbonate oder Copolycarbonate auf Basis von Diphenolen, Poly- oder Copolyacrylate und Poly- oder Copolymethacrylate wie beispielsweise Polymethylmethacrylat (PMMA), Poly- oder Copolykondensate der Terephthalsäure, wie beispielsweise Poly- oder Copolyethylenterephthalat (PET oder CoPET), glycol-modifiziertes PET (PETG), glycol-modifiziertes Poly- oder Copolycyclohexandimethylenterephthalat (PCTG), Poly- oder Copolybutylenterephthalat (PBT oder CoPBT), Poly- oder Copolykondensate der Naphthalindicarbonsäure, wie beispielsweise Polyethylenglykolnaphthalat (PEN), Polyvinylhalogenide, wie beispielsweise Polyvinylchlorid (PVC), ganz besonders bevorzugt wenigstens ein Polycarbonat oder Copolycarbonat. In dieser Ausführungsform kann das Prägehologramm mit einem geeigneten Prägestempel direkt auf die Schicht (i) aufgebracht werden. Die Schichten (i) und (ii) können auch vertauscht werden.

In einer weiteren Ausführungsform umfasst der Blend aus Poly- oder Copolycarbonaten enthaltend bifunktionelle Carbonatstruktureinheiten der Formel (II) die bifunktionellen Carbonatstruktureinheiten der Formel (II) in einer Menge von 2 Massen-% bis 60 Massen-%, vorzugsweise von 5 Massen-% bis 55 Massen-%, besonders bevorzugt von 10 Massen-% bis 55 Massen-%, und die wenigstens weitere Schicht (ii) umfasst vorzugsweise Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten, besonders bevorzugt Polycarbonate oder Copolycarbonate auf Basis von Diphenolen, Poly- oder Copolyacrylate und Poly- oder Copolymethacrylate wie beispielsweise Polymethylmethacrylat (PMMA), Poly- oder Copolykondensate der Terephthalsäure, wie beispielsweise Poly- oder Copolyethylenterephthalat (PET oder CoPET), glycol-modifiziertes PET (PETG), glycol-modifiziertes Poly- oder Copolycyclohexandimethylenterephthalat (PCTG), Poly- oder Copolybutylenterephthalat (PBT oder CoPBT), Poly- oder Copolykondensate der Naphthalindicarbonsäure, wie beispielsweise Polyethylenglykolnaphthalat (PEN), Polyvinylhalogenide, wie beispielsweise Polyvinylchlorid (PVC), ganz besonders bevorzugt wenigstens ein Polycarbonat oder Copolycarbonat. In dieser Ausführungsform kann das Prägehologramm mit einem geeigneten Prägestempel direkt auf die Schicht (i) aufgebracht werden. Die Schichten (i) und (ii) können auch vertauscht werden.

In einer weiteren Ausführungsform kann die wenigstens eine Schicht (i) und/oder die wenigstens eine weitere Schicht (ii) ein lasersensitives Additiv, vorzugsweise ein Schwarzpigment, besonders bevorzugt Ruß, enthalten. Diese Ausführungsform der Erfindung lässt sich auch zusätzlich gut mittels Lasergravur personalisieren.

Die Beschriftung von Kunststoff-Folien mittels Lasergravur wird in der Fachwelt und auch im Folgenden kurz als Laserbeschriftung bezeichnet. Demnach ist im Folgenden unter dem Begriff "laserbeschriftet" mittels Lasergravur beschriftet zu verstehen. Das Verfahren der Lasergravur ist dem Fachmann bekannt und nicht zu verwechseln mit dem Bedrucken mittels Laserdruckern.

Als lasersensible Additive kommen beispielsweise sogenannte Laser-Markier-Additive in Frage, d.h. solche aus einem Absorber im Wellenlängenbereich des zu verwendenden Lasers, bevorzugt im Wellenlängenbereich von ND:YAG-Lasern (Neodym-dotierte Yttrium-Aluminium-Granat-Laser). Solche Laser-Markier-Additive und deren Verwendung in Formmassen sind beispielsweise in WO-A 2004/50766 und WO-A 2004/50767 beschrieben und werden von der Fa. DSM unter dem Markennamen Micabs™ kommerziell angeboten. Weiterhin als lasersensible Additive geeignete Absorber sind Ruß, sowie phosphorhaltige Zinn-Kupfer-Mischoxide wie z.B. in WO-A 2006/042714 beschrieben.

Das lasersensitives Additiv kann in der erfindungsgemäßen Schicht (i) und/oder (ii) in einer Menge von 40 bis 180 ppm, vorzugsweise von 50 bis 160 ppm enthalten sein.

Bevorzugt ist es, wenn die Korngröße des lasersensiblen Additivs im Bereich von 100 nm bis 10 µm liegt, und besonders vorteilhaft, wenn sie im Bereich von 50 nm bis 2 µm liegt.

Der optionale Zusatz von lasersensitiven Additiven, vorzugsweise Schwarzpigmenten, besonders bevorzugt Ruß in der erfindungsgemäßen Schicht (i) und/oder (ii) beeinträchtigen die erfindungsgemäße verbesserte Helligkeit des Prägehologramms nicht.

Im erfindungsgemäßen Schichtaufbau kann die wenigstens eine Schicht (i) und die wenigstens eine weitere Schicht (ii) jeweils eine Schichtdicke im Bereich von ≥ 20 bis ≤ 200 µm, vorzugsweise im Bereich von ≥ 25 bis ≤ 145 µm, ganz besonders bevorzugt im Bereich von ≥ 30 bis ≤ 120 µm aufweisen.

Die Schichten (i) und/oder (ii) können erfindungsgemäß Monofolien und/oder Mehrschichtfolien umfassen, die durch Extrusion oder Coextrusion hergestellt werden können und die vorstehend beschriebenen thermoplastischen Polymere umfassen. Vorzugsweise handelt es sich bei den Schichten (i) und/oder (ii) um Monofolien, die vorzugsweise durch Extrusion hergestellt werden können.

In vorteilhaften Ausführungsformen weisen die Schichten (i) und/oder (ii) unterschiedlich strukturierte Oberflächen auf. Eine Seite der Schicht (i) und/oder (ii) weist eine Rauigkeit R3z von ≥ 0,5 µm bis ≤ 25 µm, vorzugsweise > 0,5 µm bis < 17 µm, besonders bevorzugt > 0,5 µm bis ≤ 15 µm, auf. Die Rauigkeit R3z wird bestimmt gemäß ISO 4287/88. Vorteilhafterweise wird das Prägehologramm auf die Seite der Schicht (i) und/oder (ii) aufgebracht, die eine Rauigkeit R3z von > 0,5 µm bis ≤ 25 µm, vorzugsweise ≥ 0,5 µm bis ≤ 17 µm, besonders bevorzugt ≥ 0,5 µm bis ≤ 15 µm, aufweist.

Der Schichtaufbau kann gegebenenfalls weitere Schichten wenigstens einen thermoplastischen Kunststoffs umfassen. Zur Vermeidung von Wiederholungen wird hier auf die Beschreibung und bevorzugten Ausführungsformen des thermoplastischen Kunststoffs verwiesen, der vorstehend für die Schichten (i) und (ii) beschrieben wurde.

Bei diesen gegebenenfalls weiteren Schichten kann es sich um ein- oder mehrschichtige Folien handeln, die beispielsweise noch zusätzlich einen Füllstoff aufweisen. Bei dem Füllstoff handelt es sich bevorzugt um wenigstens ein Farbpigment und/oder wenigstens einen sonstigen Füllstoff zur Erzeugung einer Transluzenz der gefüllten Schichten, besonders bevorzugt um ein Weißpigment, ganz besonders bevorzugt um Titandioxid, Zirkoniumdioxid oder Bariumsulfat, in einer bevorzugten Ausführungsform um Titandioxid.

Das Füllen einer weiteren Schicht im erfindungsgemäßen Schichtaufbau mit wenigstens einem solchen Füllstoff verbessert die Sichtbarkeit der eingebrachten Beschriftung bzw. Abbildung(en), wodurch auch die Wahrnehmung der verbesserten Schärfe und Auflösung weiter erhöht wird.

Die genannten Füllstoffe werden vorzugsweise in Mengen von 2 bis 45 Gew.-%, besonders bevorzugt von 5 bis 30 Gew.-%, bezogen auf das Gesamtgewicht der Schicht, die den Füllstoff enthält, welche zum Beispiel durch Extrusion oder Coextrusion erfolgen kann, zugegeben.

Vorzugsweise umfassen die erfindungsgemäßen Schichten (i) und (ii) keinen Füllstoff, besonders bevorzugt sind die erfindungsgemäßen Schichten (i) und (ii) transparent. Transparent bedeutet eine Lichttransmission ≥ 75% (bestimmt nach ISO 13468-2).

Die Schichtdicke der gegebenenfalls im erfindungsgemäßen Schichtaufbau enthaltenen weiteren Schichten kann jeweils eine Dicke im Bereich von ≥ 20 bis ≤ 700 µm, vorzugsweise im Bereich von ≥25 bis ≤ 250 µm, ganz besonders bevorzugt im Bereich von ≥ 30 bis ≤ 120 µm aufweisen.

Weiterer Gegenstand der Erfindung ist ein Verfahren zur Herstellung eines Schichtaufbaus wie vorstehend beschrieben, umfassend die Schritte
a) Aufbringung wenigstens eines Prägehologramms auf einer Schicht (i) oder (ii) in der Weise, dass die Nanostruktur des wenigstens einen Prägehologramms in Richtung der Schicht zeigt, die die niedrigere Erweichungstemperatur aufweist und wobei die Schichten (i) oder (ii) jeweils einen thermoplastischen Kunststoff umfassen und wobei die Vicat-Erweichungstemperatur B/50, bestimmt gemäß ISO 306 (50N; 50°/h) der Schicht (i) um ≥ 3°C bis ≤ 45 °C, vorzugsweise um ≥ 10 bis ≤ 40 °C, besonders bevorzugt um ≥ 15 bis ≤ 30 °C höher oder niedriger als die Vicat-Erweichungstemperatur B/50 der Schicht (ii) ist,
b) Gegebenenfalls Bereitstellung einer oder mehrerer weiterer Schichten eines thermoplastischen Kunststoffs, vorzugsweise Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten, besonders bevorzugt Polycarbonate oder Copolycarbonate auf Basis von Diphenolen, Poly- oder Copolyacrylate und Poly- oder Copolymethacrylate wie beispielsweise Polymethylmethacrylat (PMMA), Poly- oder Copolykondensate der Terephthalsäure, wie beispielsweise Poly- oder Copolyethylenterephthalat (PET oder CoPET), glycol-modifiziertes PET (PETG), glycol-modifiziertes Poly- oder Copolycyclohexandimethylenterephthalat (PCTG), Poly- oder Copolybutylenterephthalat (PBT oder CoPBT), Poly- oder Copolykondensate der Naphthalindicarbonsäure, wie beispielsweise Polyethylenglykolnaphthalat (PEN), Polyvinylhalogenide, wie beispielsweise Polyvinylchlorid (PVC),
c) Platzierung der Schichten (i) und (ii) an die gewünschte Position des Schichtaufbaus, vorzugsweise bilden die Schichten (i) und (ii) äußere Schichten des Schichtaufbaus, die gegebenenfalls mit einer weiteren Schutzschicht aus einem thermoplastischen Material versehen werden können,
d) Laminierung des Schichtaufbaus bei einer Temperatur von 120 °C bis 210 °C vorzugsweise von 130 °C bis 205 °C, besonders bevorzugt von 150 °C bis 200 °C und einem Druck von 10 N/cm² bis 400 N/cm², vorzugsweise von 30 N/cm² bis 300 N/cm², besonders bevorzugt von 40 N/cm² bis 250 N/cm².

Die Laminierung des Schichtaufbaus, welcher beispielsweise ein Stapel von mehreren Kunststofffolien umfasst, vorzugsweise drei bis fünfzehn Kunststofffolien, kann nach bekannten Methoden erfolgen. In den mittleren Lagen des Schichtaufbaus können weiße Kunststofffolien platziert werden, in den äußeren Lagen transparente Kunststofffolien, vorzugsweise umfassen diese äußeren Lagen wenigstens eine Schicht (i) umfassend einen thermoplastischen Kunststoff und wenigstens eine weitere Schicht (ii) umfassend einen thermoplastischen Kunststoff, dadurch gekennzeichnet, dass die Vicat-Erweichungstemperatur B/50, bestimmt gemäß ISO 306 (50N; 50°/h) der Schicht (i) um ≥ 3°C bis ≤ 45 °C, vorzugsweise um ≥ 10 bis ≤ 40 °C, besonders bevorzugt um ≥ 15 bis ≤ 30 °C höher oder niedriger als die Erweichungstemperatur der Schicht (ii) ist, und dass wenigstens ein Prägehologramm auf der Schicht (i) oder (ii) so aufgebracht ist, dass die Nanostruktur des wenigstens einen Prägehologramm in Richtung der Schicht zeigt, die die niedrigere Erweichungstemperatur aufweist. Gegebenenfalls kann eine weitere transparente Kunststofffolie zum Schutz des Prägeholgramms der Schichten (i) und (ii) darüber gelegt werden, um das Prägehologramm zu schützen. Dieser Kunststofffolienstapel wird üblicherweise ausgerichtet, fixiert und in einer Laminierpresse unter Einwirkung von Wärme und Druck für eine bestimmte Zeitspanne verpresst, so dass ein monolithischer Verbund der Folienschichten entsteht, ein sogenanntes Laminat.

In einer Ausführungsform können auch lediglich die erfindungsgemäßen Schichten (i) und (ii) wie vorstehend beschrieben laminiert werden.

Weiterhin Gegenstand der Erfindung ist ein Sicherheitsdokument, bevorzugt ein Identifikationsdokument, enthaltend den vorstehend beschriebenen erfindungsgemäßen Schichtaufbau.

Das erfindungsgemäße Sicherheitsdokument, bevorzugt Identifikationsdokument kann weitere zusätzliche Schichten aufweisen, über die beispielsweise weitere Informationen in das Sicherheitsdokument, bevorzugt Identifikationsdokument eingebracht werden.

Bei solchen weiteren Informationen kann es sich beispielsweise um personalisierende Porträts oder nicht personalisierende allgemeine Informationen handeln, die beispielsweise in jedem gattungsgleichen Sicherheitsdokument, bevorzugt Identifikationsdokument in gleicher Form enthalten sind.

Solche Schichten können beispielsweise aus vorher mittels herkömmlicher Druckverfahren, vorzugsweise Ink-Jet- oder Laserdruck, besonders bevorzugt Farbdruck mit diesen Informationen bestückten Folien in das Sicherheitsdokument, bevorzugt Identifikationsdokument eingebracht werden.

Mittels Ink-Jet-Druckverfahren bedruckbare Folien sind dem Fachmann an sich bekannt und können Folien welche die vorstehenden thermoplastischen Kunststoffe umfassen sein. In besonders bevorzugten Ausführungsformen werden zur besseren Sichtbarkeit der aufgedruckten Informationen mittels Füllstoffen wie z.B. Titandioxid, Zirkoniumdioxid, Bariumsulfat etc. weiß oder transluzent eingefärbte Kunststoff-Folien verwendet.

Für mittels Laserdruck, insbesondere mittels Farblaserdruck zu bedruckende Folien eignen sich solche die vorstehend beschriebene thermoplastische Kunststoffe aufweisen, insbesondere solche, die einen spezifischen Oberflächenwiderstand von 10⁷ bis 10¹³ Ω, bevorzugt von 10⁸ bis 10¹² Ω aufweisen. Der spezifische Oberflächenwiderstand in Ω wird gemäß DIN IEC 60093 (1993) bestimmt.

Dabei kann es sich vorzugsweise um solche Folien handeln, bei denen dem Kunststoff vor der Folienherstellung zur Erzielung des spezifischen Oberflächenwiderstandes beispielsweise ein Additiv ausgewählt aus tertiären oder quaternären, bevorzugt quaternären Ammonium- oder Phosphoniumsalzen einer teil- oder perfluorierten organischen Säure oder quaternären Ammonium- oder Phosphoniumhexafluorophosphaten, bevorzugt einer teil- oder perfluorierten Alkylsulfonsäure, vorzugsweise einer Perfluoralkylsulfonsäure zugegeben wurde. Diese Additive können auch in den erfidnungsgemäßen Schichten (i) und/oder (ii) enthalten sein.

Bevorzugte geeignete quarternäre Ammonium- oder Phosphoniumsalze sind:
- Perfluoroctansulfonsäuretetrapropylammoniumsalz,
- Perfluorbutansulfonsäuretetrapropylammoniumsalz,
- Perfluoroctansulfonsäuretetrabutylammoniumsalz,
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetrahexylammoniumsalz,
- Perfluorbutansulfonsäuretrimethylneopentylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Diisopropyldimethylammoniumperfluorbutylsulfonat,
- Diisopropyldimethylammoniumperfluoroctylsulfonat,
- N-Methyl-tributylammoniumperfluoroctylsulfonat
- Cyclohexyldiethylmethylammoniumperfluoroctylsulfonat,
- Cyclohexyltrimethylammoniumperfluoroctylsulfonat,
sowie die entsprechenden Phosphoniumsalze. Bevorzugt sind die Ammoniumsalze.
Bevorzugt können auch ein oder mehrere der vorstehend genannten quartären Ammonium- oder Phosphoniumsalze, also auch Mischungen eingesetzt werden.

Ganz besonders geeignet ist das Perfluoroctansulfonsäuretetrapropylammoniumsalz, das Perfluoroctansulfonsäuretetrabutylammoniumsalz, das Perfluoroctansulfonsäuretetrapentylammoniumsalz, das Perfluoroctansulfonsäuretetrahexylammoniumsalz und das Perfluoroctansulfonsäuredimethyldiisopropylammoniumsalz sowie die entsprechenden Perfluorbutansulfonsäuresalze.

In einer ganz besonders bevorzugten Ausführungsform kann Perfluorbutansulfonsäuredimethyldiisopropylammoniumsalz (Diisopropyldimethylammonium-perfluorbutylsulfonat) als Additiv verwendet werden.

Die genannten Salze sind bekannt oder können nach bekannten Methoden hergestellt werden. Die Salze der Sulfonsäuren lassen sich beispielsweise durch Zusammengeben äquimolarer Mengen der freien Sulfonsäure mit der Hydroxyform des entsprechenden Kations in Wasser bei Raumtemperatur und Einengen der Lösung darstellen. Andere Herstellungsverfahren sind beschrieben z.B. in DE-A 1 966 931 und NL-A 7 802 830.

Die genannten Salze werden vorzugsweise in Mengen von 0.001 bis 2 Gew.%, bevorzugt von 0.1 bis 1 Gew.% den thermoplastischen Kunststoffen vor der Formgebung zur erfindungsgemäßen Folie, welche zum Beispiel durch Extrusion oder Coextrusion erfolgen kann, zugegeben.

Ein weiterer Gegenstand der Erfindung ist ein Laminat umfassend den erfindungsgemäßen Schichtaufbau.

Ein weiterer Gegenstand der Erfindung ist die Verwendung einer Schicht (i) umfassend einen thermoplastischen Kunststoff und wenigstens eine weitere Schicht (ii) umfassend einen thermoplastischen Kunststoff, dadurch gekennzeichnet, dass die Vicat-Erweichungstemperatur B/50, bestimmt gemäß ISO 306 (50N; 50°/h), der Schicht (i) um ≥ 3°C bis ≤ 45 °C, vorzugsweise um ≥ 10 bis ≤ 40 °C, besonders bevorzugt um ≥ 15 bis ≤ 30 °C höher oder niedriger als die Erweichungstemperatur der Schicht (ii) ist, zur Aufbringung wenigstens eines Prägehologramms, wobei die Nanostruktur des wenigstens einen Prägehologramms in Richtung der Schicht zeigt, die die niedrigere Erweichungstemperatur aufweist.

Weiterhin die Verwendung wenigstens eine Schicht (i) umfassend einen thermoplastischen Kunststoff und wenigstens eine weitere Schicht (ii) umfassend einen thermoplastischen Kunststoff, dadurch gekennzeichnet, dass die Vicat-Erweichungstemperatur B/50, bestimmt gemäß ISO 306 (50N; 50°/h) der Schicht (i) um ≥ 3°C bis ≤ 45 °C, vorzugsweise um ≥ 10 bis ≤ 40 °C, besonders bevorzugt um ≥ 15 bis ≤ 30 °C höher oder niedriger als die Erweichungstemperatur der Schicht (ii) ist, und dass wenigstens ein Prägehologramm auf der Schicht (i) oder (ii) so aufgebracht ist, dass die Nanostruktur des wenigstens einen Prägehologramm in Richtung der Schicht zeigt, die die niedrigere Erweichungstemperatur aufweist, zur Herstellung eines Schichtverbundes, vorzugsweise eines Laminats.

Die folgenden Beispiele dienen der exemplarischen Erläuterung der Erfindung und sind nicht als Beschränkung aufzufassen.

### Beispiele

### Eingesetzte Rohstoffe:

**Makrolon™ 3108 (M.3108):** hochviskoses amorphes, thermoplastisches Bisphenol A-Polycarbonat mit einem MVR 6 g/10min nach ISO 1133 bei 300°C und 1,2 kg der Firma Covestro AG
**Eastar**™ **DN 010 (DN 010):** Poly- oder Copolykondensat einer Terephthalsäure aus 54,9 Gew.-% Terephthalsäure, 9,3 Gew.-% (38 Mol-% bezogen auf die Diolkomponente) Ethylenglykol und 35,8 Gew.-% (62 Mol-% bezogen auf die Diolkomponente) Cyclohexandimethanol-1,4, mit einer inherenten Viskosität von 0,74 dl/g (gemessen in einer 1:1 Mischung aus Phenol und Tetrachlorethan bei 25°C) der Firma Eastman Chemical Company.
**Pocan**™ **B 1600 (PBT 1600):** Unmodifiziertes Polykondensat der Terephthalsäure und Butandiol-1,4 als Diolkomponente mit einer Melt Volume Rate (MVR) 14 g/10min nach ISO 1133 bei 260°C und 2,16 kg der Firma Lanxess AG.

### Rohstoff 1: Herstellung eines Polycarbonatderivats

205,7 g (0,90 Mol) Bisphenol A (2,2-Bis-(4-hydroxyphenyl)propan, 30,7 g (0,10 Mol) 1,1-Bis-(4-hydroxyphenyl)-3,3,5- trimethylcyclohexan, 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit.
Das Polycarbonatderivat A zeigte eine Vicat-Erwichungstemperatur B/50, bestimmt gemäß ISO 306 (50N; 50°/h) von 183 °C.

### Allgemeine Herstellungsvorschrift von Extrusionsfolien

Die verwendete Anlage besteht aus
▪ einem Extruder mit einer Schnecke von 105 mm Durchmesser (D) und einer Länge von 41xD. Die Schnecke weist eine Entgasungszone auf;
▪ einem Umlenkkopf;
▪ eine Extrusions-Breitschlitzdüse mit 1500 mm Breite;
▪ einem Dreiwalzen-Glättkalander mit horizontaler Walzenanordnung, wobei die dritte Walze um +/- 45° gegenüber der Horizontalen schwenkbar ist;
▪ einer Rollenbahn;
▪ einer Einrichtung zum beidseitigen Aufbringen von Schutzfolie;
▪ einer Abzugseinrichtung;
▪ Aufwickelstation.

Das Granulat des Materials wurde dem Fülltrichter des Extruders zugeführt. Im Plastifiziersystem Zylinder/Schnecke erfolgte das Aufschmelzen und Fördern des Materials. Von der Düse gelangte die Schmelze auf den Glättkalander. Auf dem Glättkalander erfolgt die endgültige Formgebung und Abkühlung des Materials. Zur Strukturierung der Folienoberflächen wurden dabei eine matte Stahl-Walze (6-er Oberfläche) und eine fein-mattierte Gummiwalze (2-er Oberfläche) eingesetzt. Anschließend wurde die Folie durch einen Abzug transportiert, danach erfolgte die Aufwickelung der Folie. Die Zusammensetzungen der Folien der Beispiele werden in Tabelle 1 beschrieben.

**Tabelle 1: Zusammensetzung Extrusionsfolien (Beispiele 1 bis 2)**

| | Rezeptur | | Schmelzetemperatur | VST/B/50 (ISO 306) |
|---|---|---|---|---|
| **Folie 1** | M.3108 | 80% | 260°C | 126°C |
| 100 µm Mono-Folie, transparent | DN 010 | 14,3% | | |
| | PBT 1600 | 5,7% | | |
| **Folie 2** | Rohstoff 1 | 100% | 330°C | 183°C |
| 100 µm Mono-Folie, transparent | | | | |
| **Folie 3** | M.3108 | 100% | 280 °C | 148°C |
| 100 µm Mono-Folie, transparent | | | | |

**Folie 4:** Polyesterfolie mit eingeprägtem Hologramm und Klebstoffschicht auf der nicht geprägten Seite der Polyesterfolie, von der Firma Krypten. Die Gesamtdicke der Folie betrug 23 µm.

**Folie 5:** 22 µm Polyester-Trägerfolie mit Trennschicht, mit einer Metall und einer KlebstoffSchicht, die auf die Seite der Trennschicht aufgetragen wird. Die Metallschicht wird mittels Vakuum- Metallisation auf die Polyester-Trägerfolie mit Trennschicht bedampft. Anschließend wird die Klebstoffbeschichtung auf die metallisierte Seite Folie aufgetragen. Die Klebstoffsicht ist eine 1 µm dünne Klebstoffschicht eines wärmeaktivierbaren Klebstoffs.

### Herstellung von Schichtaufbauten

### Beispiel 1:

### Aufbringung des Hologramms auf Folie 3

- Die Folie 4 wurde auf die fein-mattierte Seite (2-er Seite) der Folie 3 aufgeklebt, wobei die Nanostruktur auf der Folie 4 so aufgebracht wurde, dass diese Nanostruktur von Folie 3 abgewandt ist. Folie 3 und Folie 4 wurden mittels Rollen-Lamination mit nachstehenden Paramatern verklebt. Temperatur der Walzen: 150°C
- Druck: 5 N/cm2
- Laminationsgeschwindigkeit: 1 Meter / Minute

### Schichtaufbau 1:

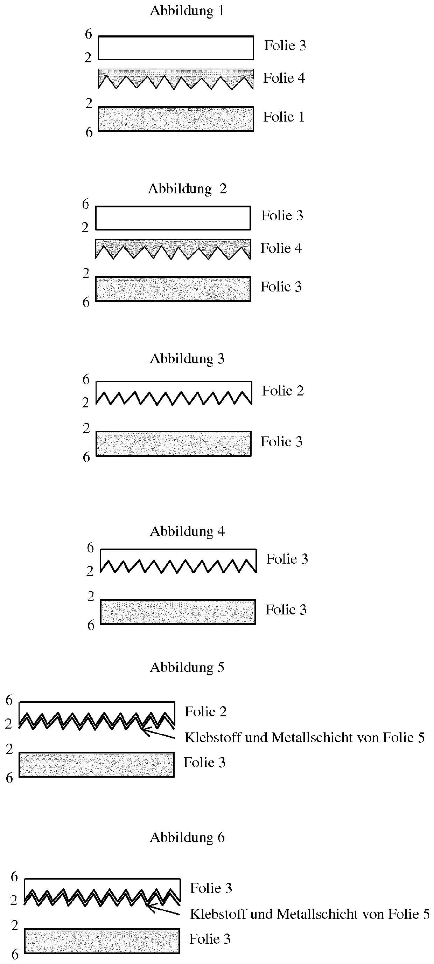

Auf den Folienverbund der Folie 3 und 4, wurde Folie 1 gelegt, mit ihrer fein-mattierten Seite (2-er Seite) in Kontakt mit Folie 4 (Abb. 1). Dieser Schichtaufbau wurde auf einer Laminationspresse der Firma Bürkle mit folgenden Parametern durchgeführt:
Vorheizen der Presse auf 190°C

- Pressen für 4 Minuten bei einem Druck von 15 N/cm²
- Pressen für 1 Minute bei einem Druck von 200 N/cm²
- Abkühlen der Presse auf 38°C, Öffnen der Presse und Entnahme des Laminats.

### Beispiel 2 (Vergleich):

Analog zu Beispiel 1 wurde ein weiterer Schichtaufbau 2 hergestellt, bei dem jedoch anstelle der Folie 1 Folie 3 verwendet wurde (Abb. 2).

Die visuelle Begutachtung der Laminate 1 und 2 zeigte deutlich, dass die Prägehologramme im erfindungsgemäßen Laminat 1 eine bessere Helligkeit aufwiesen. Weiterhin waren die Details der dargestellten Formen sowie die Lichtbrechung des Prägehologramms nahezu unverändert.

### Beispiel 3:

Auf der fein-mattierten Seite (2-er Seite) der Folie 2, werden mittels Heißprägen Nanogravuren in die Folienoberfläche geprägt. Auf dem Prägestempel wird vor dem Prägeprozess, mittels Vakuum-Metallisation eine dünne Metallschicht aufgedampft, in einer Dicke von wenigen nm. Der Prägestempel hat eine spezielle Beschichtung, um eine permanente Haftung der Metallschicht am Stempel zu verhindern. Die Folie wird an der Stelle, an der die Prägung erfolgen soll, mit einer dünnen Schicht eines wärmeaktivierbaren Klebstoffs versehen, mit dem Klebstoff des Typs S32380 von der Firma Apollo Inks.

Der Prägeprozess der Folie findet in einer Vakuumkammer statt, um die Prägestempel ununterbrochen metallisieren zu können mit nachfolgende beschriebenen Prägebedingungen:
Temperatur des Prägestempels: 210°C
Prägedruck: 500 N/cm²
Prägezeit: 1,5 s.

### Schichtaufbau 3:

Auf die geprägte fein-mattierte Seite (2-er Seite) der Folie 2 wird die Folie 3 mit der fein-mattierten Seite (2-er Seite) in Kontakt mit Folie 2 (Abb. 3) gelegt. Die Lamination des Schichtaufbaus erfolgt mit folgenden Paramatern auf einer Laminationspresse der Firma Bürkle:
Vorheizen der Presse auf 190°C

- Pressen für 4 Minuten bei einem Druck von 15 N/cm²
- Pressen für 1 Minute bei einem Druck von 200 N/cm²
- Abkühlen der Presse auf 38°C, Öffnen der Presse und Entnahme des Laminats.

### Beispiel 4 (Vergleich):

Analog zu Beispiel 3 wird ein weiterer Schichtaufbau 4 hergestellt, bei dem jedoch anstelle der Folie 2 die Folie 3 verwendet wird (Abb. 4).

Die visuelle Begutachtung der Laminate 3 und 4 zeigt deutlich, dass die Prägehologramme im erfindungsgemäßen Laminat 3 eine bessere Helligkeit aufweisen. Weiterhin sind die Details der dargestellten Formen sowie die Lichtbrechung des Prägehologramms nahezu unverändert.

### Beispiel 5:

Auf die fein-mattierten Seite (2-er Seite) der Folie 2 wird die Folie 5 aufgeklebt und mittels Rollen-lamination fixiert unter den nachstehenden Bedingungen:
- Temperatur der Walzen: 150°C
- Druck: 5 N/cm2
- Laminationsgeschwindigkeit: 1 m/Minute

Anschließend wird die 22 µm dicke Trägerfolie der Folie 5 entfernt.

Die Prägung des Hologramms in Folie 2 erfolgt auf der Seite, die den transferierten Klebstoff und Metallschicht der Folie 5 aufweist unter den nachstehenden Prägebedingungen:
- Temperatur des Prägestempels: 210°C
- Prägedruck: 500 N/cm²
- Prägezeit: 1,5 s.

### Schichtaufbau 5:

Auf die geprägte Folie 2 wird die Folie 3 mit ihrer fein-mattierten Seite (2-er Seite) in Kontakt mit Folie 5 (Abb. 5) gebracht. Dieser Schichtaufbau wird auf einer Laminationspresse der Firma Bürkle mit folgenden Parametern durchgeführt:
Vorheizen der Presse auf 190°C

- Pressen für 4 Minuten bei einem Druck von 15 N/cm²
- Pressen für 1 Minute bei einem Druck von 200 N/cm²
- Abkühlen der Presse auf 38°C, Öffnen der Presse und Entnahme des Laminats.

### Beispiel 6 (Vergleich)

Analog zu Beispiel 5 wird ein Schichtaufbau 6 hergestellt, jedoch wird anstelle der Folie 2 die Folie 3 verwendet (Abb. 6)

Die visuelle Begutachtung der Laminate 5 und 6 zeigt deutlich, dass die Prägehologramme im erfindungsgemäßen Laminat 5 eine bessere Helligkeit aufweisen. Weiterhin sind die Details der dargestellten Formen sowie die Lichtbrechung des Prägehologramms nahezu unverändert.

Abbildungen 1 bis 6 zeigen schematisch den Schichtaufbau der Laminate 1 bis 6 mit den jeweils eingesetzten Folien. Die Ziffern auf der linken Seite der einzelnen Folienschichten geben die Oberflächenstruktur der entsprechenden Folie an.

## Patentansprüche

1. Schichtaufbau enthaltend wenigstens eine Schicht (i) umfassend einen thermoplastischen Kunststoff und wenigstens eine weitere Schicht (ii) umfassend einen thermoplastischen Kunststoff, **dadurch gekennzeichnet, dass** die Vicat-Erweichungstemperatur B/50, bestimmt gemäß ISO 306 (50N; 50°/h) der Schicht (i) um ≥ 3°C bis ≤ 45 °C, vorzugsweise um ≥ 10 bis ≤ 40 °C, besonders bevorzugt um ≥ 15 bis ≤ 30 °C höher oder niedriger als die Erweichungstemperatur der Schicht (ii) ist, und dass wenigstens ein Prägehologramm auf der Schicht (i) oder (ii) so aufgebracht ist, dass die Nanostruktur des wenigstens einen Prägehologramm in Richtung der Schicht zeigt, die die niedrigere Erweichungstemperatur aufweist.

2. Schichtaufbau gemäß Anspruch 1, **dadurch gekennzeichnet dass** der thermoplastische Kunststoff der wenigstens einen Schicht (i) und der wenigstens einen weiteren Schicht (ii) wenigstens einen Kunststoff ausgewählt ist aus Polymerisaten von ethylenisch ungesättigten Monomeren und/oder Polykondensaten von bifunktionellen reaktiven Verbindungen und/oder Polyadditionsprodukten von bifunktionellen reaktiven Verbindungen oder deren Mischungen umfasst.

3. Schichtaufbau gemäß Anspruch 1 oder 2, **dadurch gekennzeichnet dass** der thermoplastische Kunststoff der Schichten (i) und (ii) ausgewählt ist aus der Gruppe von Polycarbonaten oder Copolycarbonaten auf Basis von Diphenolen, Poly- oder Copolyacrylaten und Poly- oder Copolymethacrylaten, vorzugsweise Polymethylmethacrylaten (PMMA), Poly- oder Copolymeren mit Styrol, vorzugsweise Polystyrol (PS) oder Polystyrolacrylnitril (SAN), thermoplastischen Polyurethane, Polyolefine, vorzugsweise Polypropylentypen oder Polyolefine auf der Basis von cyclischen Olefinen (z.B. TOPAS™), Poly- oder Copolykondensaten einer aromatischen Dicarbonsäure und aliphatischen, cycloalophatischen und/oder araliphatischen Diolen mit 2 bis 16 Kohlenstoffatomen, vorzugsweise Poly- oder Copolykondensaten der Terephthalsäure, besonders bevorzugt Poly- oder Copolyethylenterephthalat (PET oder CoPET), glycol-modifiziertem PET (PETG), glycol-modifiziertem Poly- oder Copolycyclohexandimethylenterephthalat (PCTG) oder Poly- oder Copolybutylenterephthalat (PBT oder CoPBT), vorzugsweise Poly- oder Copolykondensaten der Naphthalindicarbonsäure, besonders bevorzugt Polyethylenglykolnaphthalat (PEN), Poly- oder Copolykondensat(en) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogeniden, vorzugsweise Polyvinylchlorid (PVC), oder Mischungen aus den vorangehend genannten.

4. Schichtaufbau gemäß Anspruch 1 bis 3, **dadurch gekennzeichnet, dass** der thermoplastische Kunststoff der Schichten (i) und (ii) ausgewählt ist aus der Gruppe von Polycarbonaten oder Copolycarbonaten auf Basis von Diphenolen, Poly- oder Copolykondensaten einer aromatischen Dicarbonsäure und aliphatischen, cycloalophatischen und/oder araliphatischen Diolen mit 2 bis 16 Kohlenstoffatomen, vorzugsweise Poly- oder Copolykondensaten der Terephthalsäure, besonders bevorzugt Poly- oder Copolyethylenterephthalat (PET oder CoPET), glycol-modifiziertem PET (PETG), glycol-modifiziertem Poly- oder Copolycyclohexandimethylenterephthalat (PCTG) oder Poly- oder Copolybutylenterephthalat (PBT oder CoPBT), vorzugsweise Poly- oder Copolykondensaten der Naphthalindicarbonsäure, besonders bevorzugt Polyethylenglykolnaphthalat (PEN), Poly- oder Copolykondensat(en) wenigstens einer Cycloalkyldicarbonsäure, vorzugsweise Polycyclohexandimethanolcyclohexandicarbonsäure (PCCD), Polysulfone (PSU), Polyvinylhalogeniden, vorzugsweise Polyvinylchlorid (PVC) oder Mischungen aus den vorangehend genannten.

5. Schichtaufbau gemäß Anspruch 1 bis 4, **dadurch gekennzeichnet, dass** wenigstens eine Schicht (i) oder (ii) einen thermoplastischen Kunststoff ausgewählt aus der Gruppe von Polycarbonaten oder Copolycarbonaten auf Basis von Diphenolen, Poly- oder Copolykondensaten der Terephthalsäure, vorzugsweise Poly- oder Copolyethylenterephthalat (PET oder CoPET), glycol-modifiziertem PET (PETG), glycol-modifiziertem Poly- oder Copolycyclohexandimethylenterephthalat (PCTG) oder Poly- oder Copolybutylenterephthalat (PBT oder CoPBT), Poly- oder Copolykondensaten der Naphthalindicarbonsäure, vorzugsweise Polyethylenglykolnaphthalat (PEN), Poly- oder Copolykondensat(en) wenigstens einer Cycloalkyldicarbonsäure, vorzugsweise Polycyclohexandimethanolcyclohexandicarbonsäure (PCCD), Polysulfone (PSU), Polyvinylhalogeniden, vorzugsweise Polyvinylchlorid (PVC) oder Mischungen aus den vorangehend genannten, umfasst und wobei der kristalline Anteil der vorstehend genannten thermoplastischen Kunststoffen in der Schicht (i) oder (ii) ≤ 40 Gew.-%, vorzugsweise 0 bis ≤ 30 Gew.-%, besonders bevorzugt 0 bis ≤ 25 Gew.-% umfasst.

6. Schichtaufbau gemäß Anspruch 1 bis 5, **dadurch gekennzeichnet, dass** wenigstens eine Schicht (i) oder (ii) einen thermoplastischen Kunststoff umfassend
a) wenigstens ein oder mehrere Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen wobei das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% bezogen auf die Diolkomponente aufweisen,
b) einen Blend aus wenigstens einem oder mehreren Poly- oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en), wobei der Anteil an Poly- oder Copolycarbonat(en) in diesem Blend in einem Bereich von >0 Gew.-% bis ≤ 90 Gew.-%, vorzugsweise > 0 Gew.-% bis≤ 80 Gew.-%, liegt, und wobei das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% vorzugsweise in einem Bereich von ≥ 25 bis ≤ 75 mol-%, besonders bevorzugt in einem Bereich von ≥ 25 bis ≤ 70 mol-%, bezogen auf die Diolkomponente aufweisen,
oder
c) einen Blend aus Poly- oder Copolycarbonaten enthaltend bifunktionelle Carbonatstruktureinheiten der Formel (II) 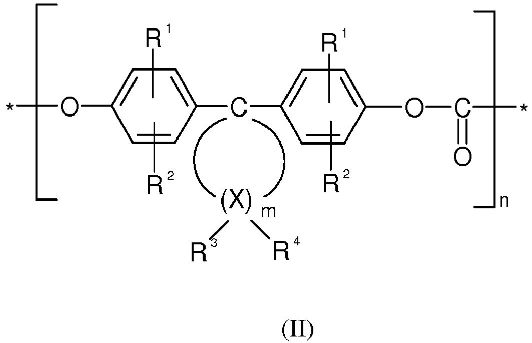 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl,
X Kohlenstoff, und
n eine ganze Zahl größer 20 bedeuten,
mit der Maßgabe, dass an mindestens einem Atom X, R³ und R⁴ gleichzeitig Alkyl bedeuten,
aufweist.

7. Schichtaufbau gemäß Anspruch 6, **dadurch gekennzeichnet, dass** die weitere Schicht (i) oder (ii) einen thermoplastischen Kunststoff umfasst aus der Gruppe von Polycarbonnaten oder Copolycarbonaten auf Basis von Diphenolen, Poly- oder Copolyacrylaten und Poly- oder Copolymethacrylaten wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensaten einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensaten der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten, besonders bevorzugt Polycarbonaten oder Copolycarbonaten auf Basis von Diphenolen, Poly- oder Copolyacrylaten und Poly- oder Copolymethacrylaten wie beispielsweise Polymethylmethacrylat (PMMA), Poly- oder Copolykondensate der Terephthalsäure, wie beispielsweise Poly- oder Copolyethylenterephthalat (PET oder CoPET), glycol-modifiziertes PET (PETG), glycol-modifiziertes Poly- oder Copolycyclohexandimethylenterephthalat (PCTG), Poly- oder Copolybutylenterephthalat (PBT oder CoPBT), Poly- oder Copolykondensaten der Naphthalindicarbonsäure, wie beispielsweise Polyethylenglykolnaphthalat (PEN), Polyvinylhalogenide, wie beispielsweise Polyvinylchlorid (PVC), ganz besonders bevorzugt wenigstens ein Polycarbonat oder Copolycarbonat.

8. Schichtaufbau gemäß Anspruch 1 bis 7, **dadurch gekennzeichnet, dass** die wenigstens eine Schicht (i) und die wenigstens eine weitere Schicht (ii) jeweils eine Schichtdicke im Bereich von ≥ 20 bis ≤ 200 µm, vorzugsweise im Bereich von ≥ 25 bis ≤ 145 µm, ganz besonders bevorzugt im Bereich von ≥ 30 bis ≤ 120 µm aufweisen.

9. Schichtaufbau gemäß Anspruch 1 bis 8, **dadurch gekennzeichnet, dass** wenigstens eine Schicht (i) und/oder (ii) ein lasersensibles Additiv, vorzugsweise ein Schwarzpigment, besonders bevorzugt Ruß, umfasst.

10. Schichtaufbau gemäß Anspruch 9, **dadurch gekennzeichnet, dass** das lasersensible Additiv in einer Menge von 40 bis 180 ppm in dieser Schicht enthalten ist.

11. Verfahren zur Herstellung eines Schichtaufbaus gemäß Anspruch 1 bis 10, umfassend die Schritte
a) Aufbringung wenigstens eines Prägehologramms auf einer Schicht (i) oder (ii) in der Weise, dass die Nanostruktur des wenigstens einen Prägehologramms in Richtung der Schicht zeigt, die die niedrigere Erweichungstemperatur aufweist und wobei die Schichten (i) oder (ii) jeweils einen thermoplastischen Kunststoff umfassen und wobei die Vicat-Erweichungstemperatur B/50, bestimmt gemäß ISO 306 (50N; 50°/h) der Schicht (i) um ≥ 3°C bis ≤ 45 °C, vorzugsweise um ≥ 10 bis ≤ 40 °C, besonders bevorzugt um ≥ 15 bis ≤ 30 °C höher oder niedriger als die Erweichungstemperatur der Schicht (ii) ist,
b) Gegebenenfalls Bereitstellung einer oder mehrerer weiterer Schichten eines thermoplastischen Kunststoffs, vorzugsweise Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten, besonders bevorzugt Polycarbonate oder Copolycarbonate auf Basis von Diphenolen, Poly- oder Copolyacrylate und Poly- oder Copolymethacrylate wie beispielsweise Polymethylmethacrylat (PMMA), Poly- oder Copolykondensate der Terephthalsäure, wie beispielsweise Poly- oder Copolyethylenterephthalat (PET oder CoPET), glycol-modifiziertes PET (PETG), glycol-modifiziertes Poly- oder Copolycyclohexandimethylenterephthalat (PCTG), Poly- oder Copolybutylenterephthalat (PBT oder CoPBT), Poly- oder Copolykondensate der Naphthalindicarbonsäure, wie beispielsweise Polyethylenglykolnaphthalat (PEN), Polyvinylhalogenide, wie beispielsweise Polyvinylchlorid (PVC),
c) Platzierung der Schichten (i) und (ii) an die gewünschte Position des Schichtaufbaus, vorzugsweise bilden die Schichten (i) und (ii) äußere Schichten des Schichtaufbaus, die gegebenenfalls mit einer weiteren Schutzschicht aus einem thermoplastischen Material versehen werden können,
d) Laminierung des Schichtaufbaus bei einer Temperatur von 120 °C bis 210 °C vorzugsweise von 130 °C bis 205 °C, besonders bevorzugt von 150 °C bis 200 °C und einem Druck von 10 N/cm² bis 400 N/cm², vorzugsweise von 30 N/cm² bis 300 N/cm², besonders bevorzugt von 40 N/cm² bis 250 N/cm².

12. Sicherheitsdokument, vorzugsweise Identifikationsdokument enthaltend wenigstens einen Schichtaufbau gemäß Anspruch 1 bis 10.

13. Laminat umfassend einen Schichtaufbau gemäß Anspruch 1 bis 10.

14. Verwendung einer Schicht (i) umfassend einen thermoplastischen Kunststoff und wenigstens eine weitere Schicht (ii) umfassend einen thermoplastischen Kunststoff, **dadurch gekennzeichnet, dass** die Vicat-Erweichungstemperatur B/50, bestimmt gemäß ISO 306 (50N; 50°/h), der Schicht (i) um ≥ 3°C bis ≤ 45 °C, vorzugsweise um ≥ 10 bis ≤ 40 °C, besonders bevorzugt um ≥ 15 bis ≤ 30 °C höher oder niedriger als die Erweichungstemperatur der Schicht (ii) ist, zur Aufbringung wenigstens eines Prägehologramms, wobei die Nanostruktur des wenigstens einen Prägehologramms in Richtung der Schicht zeigt, die die niedrigere Erweichungstemperatur aufweist.

15. Verwendung gemäß Anspruch 14 zur Herstellung eines Laminats, vorzugsweise ein Sicherheitsdokument, besonders bevorzugt eines Identifikationsdokuments.
